# EUROPEAN PATENT APPLICATION

(11) **EP 4 759 434 A1**
(43) Date of publication of application: **17.06.2026**
(21) Application number: 25782989.5
(22) Date of filing: 02.04.2025
(51) Int. Cl.: B05C 5/02, B05C 11/10, H01M 4/04, H01M 10/42

(54) **SLOT DIE COATER FOR ELECTRODE AND METHOD FOR MANUFACTURING ELECTRODE USING SAME**

(30) Priority: 05.04.2024 KR 20240046641
(71) Applicant: LG Energy Solution, Ltd., Seoul 07335 (KR)
(72) Inventor: KIM, Young Geun, Daejeon 34122 (KR)
(74) Representative: Plasseraud IP
(86) International application number: PCT/KR2025/004307
(87) International publication number: WO 2025/211730

(57) **Abstract**

Disclosed herein relates to an electrode slot die coater may including: n (where n is an integer between 2 and 5) blocks arranged adjacent to each other; a coating shim positioned at one or more of the interfaces between the blocks, and having an insulating solution discharge flow path formed therein; and a variable unit for adjusting the opening degree of the insulating solution discharge flow path. Some embodiments of the present disclosure enable simultaneous application of electrode slurry and insulating solution onto a current collector while allowing for simple and precise control of the thickness of the insulating solution applied to the current collector.

## Description

### [Technical field]

This application claims the benefit of Korean Patent Application No. 10-2024-0046641, filed on April 5, 2024, the disclosure of which is incorporated herein by reference.

The present disclosure relates to an electrode slot die coater and an electrode manufacturing method using the same.

### [Background]

There is growing interest in secondary batteries that can be used repeatedly for long periods of time through recharging, in order to reduce dependence on fossil fuels and reduce carbon emissions. In particular, among secondary batteries, lithium secondary batteries, which use lithium ions as ions, have excellent energy density and lifespan, leading to active research and development in this field. As a result, lithium secondary batteries are used in various fields such as portable electronic devices, vehicles, and energy storage systems (ESS).

One of the main research challenges in lithium secondary batteries is improving stability, and various technologies have been proposed to prevent internal short circuits in lithium secondary batteries. For example, a technology has been proposed where an insulating solution containing a binder, inorganic particles, and a solvent is applied to the end parts of the electrode slurry coated on the current collector. Furthermore, a technology has been proposed where the electrode slurry and the insulating solution are applied simultaneously to the current collector.

However, even if an insulating solution is applied to the current collector, if the thickness of the insulating solution cannot be precisely controlled, issues may arise during subsequent processes such as rolling, notching, and tab welding. Therefore, conventionally, attempts were made to control the thickness of the insulating solution applied to the current collector by adjusting the RPM (revolutions per minute) of the insulating solution supply pump. However, the RPM of the supply pump affects not only the thickness but also the width of the insulating solution applied to the current collector, making it impossible to precisely control the thickness of the insulating solution applied to the current collector in conventional methods. Meanwhile, in the conventional method, multiple coating shims with different depths of the insulating solution coating flow path were prepared, and the operator replaced the coating shims; however, this method also could not precisely control the thickness of the insulating solution applied to the current collector and reduced the efficiency of the process. Therefore, a technology is needed that can easily and precisely control the thickness of the insulating solution applied to the current collector.

### [Summary]

### [Technical Problem]

The technical problem that the present disclosure aims to solve is to provide an electrode slot die coater and an electrode manufacturing method that can simultaneously apply electrode slurry and insulating solution onto the current collector while easily and precisely controlling the thickness of the insulating solution applied to the current collector.

### [Technical Solution]

Some embodiments of the present disclosure that may solve the technical problem are as follows.

An electrode slot die coater according to some embodiments may include: n (where n is an integer between 2 and 5) blocks arranged adjacent to each other; a coating shim positioned at one or more of the interfaces between the blocks, and having an insulating solution discharge flow path formed therein; and a variable unit for adjusting the opening degree of the insulating solution discharge flow path.

In some embodiments, the variable unit may control the degree of opening of the insulating solution discharge flow path by one or more of vertical movement, horizontal movement, and rotational movement.

In some embodiments, the coating shim may be a structure in which the insulating solution discharge flow path is formed on one or both sides.

In some embodiments, the coating shim may include a long hole step part formed in a direction crossing the insulating solution discharge flow path, and having a width longer than a width of the insulating solution discharge flow path, wherein the variable unit may adjust the degree of opening of the insulating solution discharge flow path by vertical movement.

In some embodiments, the width of the long hole step part may be within the range of 110% to 500% of the width of the insulating solution discharge flow path, wherein the depth of the long hole step part may be within the range of 20% to 100% of the depth of the insulating solution discharge flow path.

In some embodiments, the variable unit includes: a head part inserted into the long hole step part, and a body part formed by extending from the head part, wherein the width of the head part of the variable unit may correspond to the width of the long hole step part.

In some embodiments, the body part of the variable unit may have a structure connected to a pressurizing device located outside the electrode slot die coater.

In some embodiments, the coating shim includes a shim body and a plurality of shim guides formed by protruding unidirectionally from one side of the shim body to define the discharge width of the electrode slurry, wherein the insulating solution discharge flow path may have a structure formed in each of the plurality of shim guides.

In some embodiments, the electrode slot die coater may have a structure including: an upper block, a lower block, and a coating shim positioned between the upper block and the lower block.

In some embodiments, the electrode slot die coater may have a structure including: an upper block, a middle block, a lower block, a first coating shim positioned between the upper block and the middle block, and a second coating shim positioned between the middle block and the lower block, wherein at least one of the first and second coating shim may have an insulating solution discharge flow path formed therein.

An electrode manufacturing method according to some embodiments may use the above-mentioned electrode slot die coater, wherein an electrode slurry and an insulating solution may be simultaneously discharged onto a current collector sheet traveling over a coating roller.

In some embodiments, a step of discharging an electrode slurry onto a current collector sheet; and a step of discharging an insulating solution onto the side of an electrode slurry so that it comes into contact with the discharged electrode slurry may be simultaneously performed.

In some embodiments, the electrode manufacturing method may further include a drying step of drying an electrode slurry and insulating solution discharged onto the current collector together.

In some embodiments, the electrode slurry may include an electrode active material, a binder, a conductive material, and a solvent, wherein the insulating solution may include inorganic particles, a binder, and a solvent.

In some embodiments, the binder content in the electrode slurry may be in the range of 1 to 5 weight% based on the solid content of the electrode slurry, wherein the binder content in the insulating solution may be in the range of 6 to 60 weight% based on the solid content of the insulating solution.

### [Advantageous Effects]

Some embodiments of the present disclosure allow simultaneous application of the electrode slurry and insulating solution onto the current collector while enabling simple and precise control of the thickness of the insulating solution applied to the current collector.

The effects of the embodiments of the present disclosure are not limited to those mentioned above, and other effects not mentioned herein may be clearly derived and understood by those skilled in the art from the following description. That is, unintended effects resulting from the implementation of the embodiments of the present disclosure may also be clearly derived and understood by those skilled in the art to which the embodiments of the present disclosure pertain.

### [Brief Description of the Drawings]

FIG. 1 is a schematic exploded view of an electrode slot die coater according to some embodiments.
FIG. 2 is a schematic perspective view of an electrode slot die coater according to some embodiments.
FIG. 3 is a schematic top view of the coating shim of an electrode slot die coater according to some embodiments.
FIG. 4 is a cross-sectional view taken along the cutting line A-A' in FIG. 2.
FIG. 5 is a schematic front view of an electrode slot die coater according to some embodiments.
FIG. 6 is a drawing showing an electrode coated by an electrode slot die coater according to some embodiments.
FIG. 7 is a schematic exploded view of an electrode slot die coater according to other embodiments.
FIG. 8 is a drawing showing an electrode coated by an electrode slot die coater according to other embodiments.
FIG. 9 is a schematic exploded view of an electrode slot die coater according to other embodiments.
FIG. 10 is a drawing showing an electrode coated by an electrode slot die coater according to other embodiments.
FIG. 11 is a cross-sectional view taken along the cutting line B-B' in FIG. 10.
FIG. 12 is a schematic exploded view of an electrode slot die coater according to other embodiments.
FIG. 13 is a cross-sectional view of an electrode coated by an electrode slot die coater according to other embodiments, for comparison with FIG. 11.

### [Best Mode for Carrying out the Invention]

The terms and words used in this specification should not be interpreted as limited to their conventional or dictionary meanings, but should be interpreted in accordance with the principle that the inventor may appropriately define the meanings of terms and words to describe his own invention in the best possible manner, so as to conform to the technical concept of the present disclosure.

In this specification, terms such as "include" or "have" are intended to designate the presence of the features, numbers, steps, operations, components, parts, or combinations thereof described in the specification, and should not be understood as precluding the presence or possibility of one or more other features, numbers, steps, operations, components, parts, or combinations thereof. Furthermore, when a part such as a layer, film, area, or plate is described as being "on" another part, this includes not only cases where it is directly above the other part but also cases where there is another part in between. Conversely, when a part such as a layer, film, area, or plate is described as being "under" another part, this includes not only cases where it is directly below the other part but also cases where there is another part in between.

The examples and drawings are merely examples of the present disclosure and do not represent all of the technical ideas of the present disclosure; therefore, it should be understood that various equivalents and modifications may be made without departing from the scope of the present disclosure.

In describing the present disclosure, detailed descriptions of known configurations or functions that are deemed to obscure the essence of the disclosure may be omitted.

The drawings are provided to further explain the disclosure to those skilled in the art, and therefore, the shapes, sizes, and numbers of components in the drawings may be exaggerated, omitted, or shown in a simplified manner for clarity. The shapes, sizes, or ratios of components in the drawings do not necessarily reflect the actual shapes, sizes, or ratios of the components.

One aspect of the present disclosure relates to an electrode slot die coater.

In some embodiments, the electrode slot die coater may include n (where n is an integer between 2 and 5) blocks arranged adjacent to each other; a coating shim positioned at one or more of the interfaces between the blocks, and having an insulating solution discharge flow path formed therein; and a variable unit for adjusting the degree of opening of the insulating solution discharge flow path. The electrode slurry is discharged from the slot located between the adjacent two blocks and the coating shim, and the insulating solution is discharged from the insulating solution discharge flow path of the coating shim. Thus, the electrode slot die coater can simultaneously apply the electrode slurry and the insulating solution onto the current collector. Meanwhile, since the variable unit adjusts the opening degree of the insulating solution discharge flow path, the electrode slot die coater can easily and precisely control the thickness of the insulating solution applied to the current collector. In other words, the present disclosure enables the thickness of the insulating solution applied to the current collector to be adjusted in an in-line manner by including the variable unit.

In some embodiments, the variable unit can control the degree of opening of the insulating solution discharge flow path by one or more of vertical movement, horizontal movement, and rotational movement. The variable unit can enter the insulating solution discharge flow path through one or more of the movements of vertical movement, horizontal movement, and rotational movement, thereby blocking the movement of the insulating solution and reducing the degree of opening of the insulating solution discharge flow path. Meanwhile, the variable unit can move away from the insulating solution discharge flow path by performing one or more of the vertical movement, horizontal movement, and rotational movement, thereby not blocking the movement of the insulating solution and increasing the degree of opening of the insulating solution discharge flow path. In this way, by adjusting the degree of opening of the insulating solution discharge flow path through the variable unit, the electrode slot die coater can precisely control the thickness of the insulating solution applied to the current collector.

In some embodiments, the coating shim may have a structure in which an insulating solution discharge flow path is formed on one or both sides. The insulating solution discharge flow path may be grooves formed on one or both sides of the coating shim, providing a path for the insulating solution to be discharged. The insulating solution is supplied from an insulating solution supply pump located outside the electrode slot die coater to an insulating solution inlet flow path formed in any one of the blocks, and then applied to the current collector via the insulating solution discharge flow path.

In some embodiments, the coating shim may include a long hole step part formed in a direction crossing the insulating solution discharge flow path and having a width longer than the width of the insulating solution discharge flow path, and the variable unit may adjust the degree of opening of the insulating solution discharge flow path through vertical movement. The long hole step part prevents the insulating solution from flowing back when the variable unit adjusts the opening degree of the insulating solution discharge flow path. In some embodiments, the long hole step part may be formed in a direction perpendicular to the insulating solution discharge flow path.

In some embodiments, the width of the long hole step part may be within a range of 110% to 500% of the width of the insulating solution discharge flow path. If the width of the long hole step part is too small compared to the width of the insulating solution discharge flow path, it may not be able to prevent the insulating solution from flowing back. If the width of the long hole step part is too large compared to the width of the insulating solution discharge flow path, the insulating solution may not move sufficiently into the long hole step part, making it difficult to precisely control the degree of opening of the insulating solution discharge flow path. In some embodiments, the width of the long hole step part may be 150% or more of the width of the insulating solution discharge flow path. In some embodiments, the width of the long hole step part may be 200% or more of the width of the insulating fluid discharge flow path. In some embodiments, the width of the long hole step part may be 450% or less of the width of the insulating solution discharge flow path. In some embodiments, the width of the long hole step part may be 400% or less of the width of the insulating solution discharge flow path. In some embodiments, the width of the long hole step part may be 350% or less of the width of the insulating solution discharge flow path. In some embodiments, the width of the long hole step part may be 300% or less of the width of the insulating solution discharge flow path.

In some embodiments, the depth of the long hole step part may be within a range of 20% to 100% of the depth of the insulating solution discharge flow path. If the depth of the long hole step part is too small relative to the depth of the insulating solution discharge flow path, it may not prevent backflow of the insulating solution or precisely control the degree of opening of the insulating solution discharge flow path. In some embodiments, the depth of the long hole step part may be 30% or more of the depth of the insulating fluid discharge flow path. In some embodiments, the depth of the long hole step part may be 40% or more of the depth of the insulating fluid discharge flow path. In some embodiments, the depth of the long hole step part may be 50% or more of the depth of the insulating fluid discharge flow path.

In some embodiments, the variable unit includes a head part inserted into the long hole step part and a body part formed by extending from the head part, and the width of the head part of the variable unit may correspond to the width of the long hole step part. Since the width of the head part of the variable unit corresponds to the width of the long hole step part, the variable unit can more precisely control the degree of opening of the insulating solution discharge flow path.

In some embodiments, the body part of the variable unit may be connected to a pressurizing device located outside the electrode slot die coater. The pressurizing device may provide power to the variable unit to enable it to move up and down. As a non-limiting example, the pressurizing device may be a hydraulic press, motor, or cylinder. The body part of the variable unit may be connected to the pressurizing device located outside the electrode slot die coater by passing through one of the blocks.

In some embodiments, the coating shim includes a shim body and a plurality of shim guides formed by protruding unidirectionally from one side of the shim body to define the discharge width of the electrode slurry, and the insulating solution discharge flow path may be a structure formed in each of the plurality of shim guides. The coating shim may define a slot, which is the space from which the electrode slurry is discharged from the electrode slot die coater, together with two adjacent blocks. The length of the slot may be substantially the same as the distance between adjacent shim guides. The height of the slot may be substantially the same as the thickness of the coating shim. When the number of shim guides is m (where m is an integer between 3 and 5), there may be m-1 slots between the coating shim and the two adjacent blocks. In this case, the two shim guides may be formed by protruding in one direction from both ends of one side of the shim body.

In some embodiments, the electrode slot die coater may have a structure including an upper block, a lower block, and a coating shim positioned between the upper block and the lower block. In this case, the electrode slot die coater can apply an electrode slurry and an insulating solution in a single layer onto the current collector. In some embodiments, the electrode slot die coater may include an upper block, a middle block, a lower block, a first coating shim positioned between the upper block and the middle block, and a second coating shim positioned between the middle block and the lower block, wherein at least one of the first and second coating shims may have an insulating solution discharge flow path formed therein. In this case, the electrode slot die coater can apply the electrode slurry in two layers on the current collector. In this case, the electrode slot die coater can apply the electrode slurry in one or two layers on the current collector. As such, the number of layers of the electrode slurry applied on the current collector may vary depending on the number of blocks arranged adjacent to each other. As in the above embodiments, when the number of blocks is n (where n is an integer between 2 and 5), the number of layers of electrode slurry applied to the current collector may be n-1, but the present disclosure is not limited thereto. Depending on the arrangement of the blocks, when the number of blocks is n, the number of layers of electrode slurry applied to the current collector may be n, n-2, or n-3.

Another aspect of the present disclosure relates to an electrode manufacturing method.

In some embodiments, the electrode manufacturing method may be performed using the aforementioned electrode slot die coater, which can simultaneously discharge electrode slurry and insulating solution onto a current collector sheet traveling over a coating roller. As a result, the electrode manufacturing method according to the present disclosure exhibits superior electrode manufacturing efficiency compared to methods that perform electrode slurry coating and insulating solution coating using separate coaters.

In some embodiments, the electrode manufacturing method can simultaneously perform the steps of discharging the electrode slurry onto the current collector and discharging the insulating solution onto the side of the electrode slurry to be in contact with the discharged electrode slurry. Accordingly, the electrode manufacturing method according to the present disclosure can prevent the sliding phenomenon that may occur on the side of the electrode slurry, thereby improving the coating quality of the electrode.

In some embodiments, the electrode manufacturing method may further include a drying step for drying the electrode slurry and insulating solution discharged onto the current collector together. In this case, the drying method may be any method capable of completely drying the solvent contained in the electrode slurry and insulating solution. As non-limiting examples, the drying method may include one or more of a hot air drying method, a direct heating method, and an induction heating method.

In some embodiments, the electrode slurry may include an electrode active material, a binder, a conductive material, and a solvent, and the insulating solution may include inorganic particles, a binder, and a solvent. In some embodiments, the electrode slurry may be a positive electrode slurry, and the electrode active material may be a positive electrode active material.

As non-limiting examples, the positive electrode active materials may include one or more among lithium-iron oxide (e.g.,LiFePO₄ etc.), lithium-manganese oxide (e.g., LiMnO₂, LiMn₂O₄ etc.), lithium-cobalt oxide (e.g., LiCoO₂ etc.), lithium-nickel oxide (e.g., LiNiO₂ etc.), lithium-nickel-manganese oxide (e.g., LiNi_{1-y1}Mn_{y1}O₂, (where 0<y1<1) and LiMn_{2-z1}Ni_{z1}O₄ (where 0<z1<2) etc.), lithium-nickel-cobalt oxide (e.g., LiNi_{1-y2}Co_{y2}O₂ (where 0<y2<1) etc.), lithium-manganese-cobalt oxide (e.g., LiCo_{1-y3}Mn_{y3}O₂ (where 0<y3<1) and LiMn_{2-z2}Co_{z2}O₄ (where 0<z2<2) etc.), lithium-nickel-manganese-cobalt oxide (e.g., Li(Niₚ₁Co_{q1}Mnᵣ₁)O₂ (where 0<p1<1, 0<q1<1, 0<r1<1, p1+q1+r1=1), Li(Niₚ₂Co_{q2}Mnᵣ₂)O₄ (where 0<p2<2, 0<q2<2, 0<r2<2, p2+q2+r2=2) etc.), lithium-nickel-cobalt-metal (M) oxide (e.g., Li(Niₚ₃Co_{q3}Mnᵣ₃Mₛ₁)O₂ (where M is selected from the group consisting of Al, Cu, Fe, V, Cr, Ti, Zr, Zn, Ta, Nb, Mg, B, W, and Mo, and p3, q3, r3, and s1 are independent atomic fractions of the elements, with 0<p3<1, 0<q3<1, 0<r3<1, 0<s1<1, and p3+q3+r3+s1=1) etc.), and mixtures thereof.

As non-limiting examples, the binder may include one or more among polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, ethylene-propylene-diene terpolymer, sulfonated ethylene-propylene-diene terpolymer, styrene-butadiene rubber, styrene-butadiene rubber-carboxymethyl cellulose fluorinated rubber, and mixtures thereof. As non-limiting examples, the conductive material may include carbon-based materials such as carbon nanotubes, graphite; carbon black, acetylene black, ketjen black, channel black, furnace black, lamp black, thermal black; conductive fibers such as carbon fibers or metal fibers; metal powders such as fluorocarbon, aluminum, and nickel powder; conductive whiskers such as zinc oxide and potassium titanate; conductive metal oxides such as titanium oxide; polyphenylene; and one or more mixtures thereof. As non-limiting examples, the solvent may include N-methyl pyrrolidone, dimethyl formamide, acetone, dimethyl acetamide, dimethyl sulfoxide, and one or more mixtures thereof. As non-limiting examples, the inorganic particles may include one or more among Al₂O₃, BaTiO₃, CaO, CeO₂, NiO, MgO, SiO₂, SnO₂, SrTiO₃, TiO₂, Y₂O₃, ZnO, ZrO₂, Pb(Zr,Ti)O₃(PZT), (Pb,La)(Zr,Ti)O₃(PLZT), PB(Mg₃Nb_{2/3})O₃-PbTiO₃(PMN-PT), hafnium (HfO₂), and a mixture of one or more of these.

In some embodiments, the binder content in the electrode slurry is in the range of 1 to 5 weight % based on the solid content of the electrode slurry, and the binder content in the insulating solution is in the range of 6 to 60 weight % based on the solid content of the insulating solution.

### [Mode for Carrying out the Invention]

The embodiments of the present disclosure will now be described in detail with reference to the accompanying drawings.

### (First embodiment)

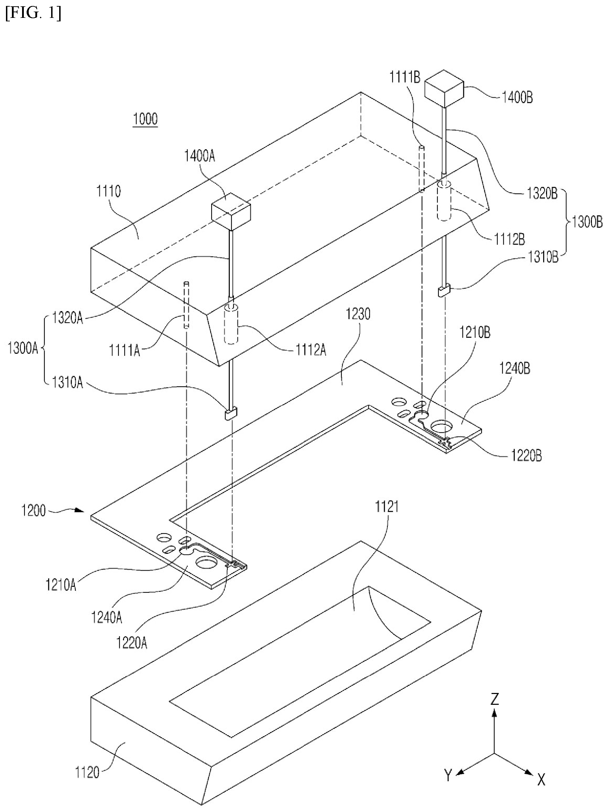

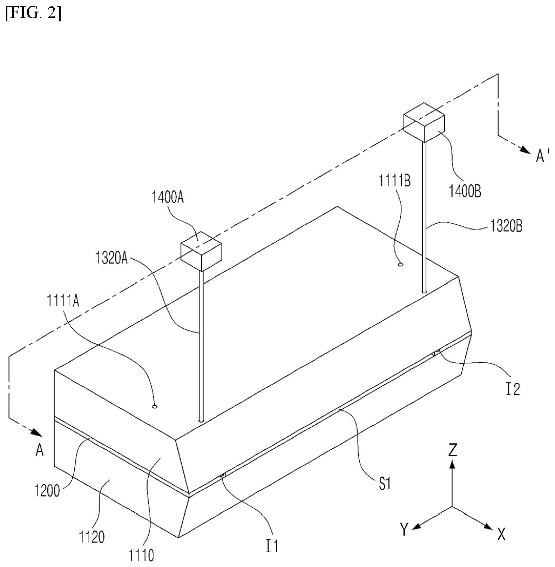

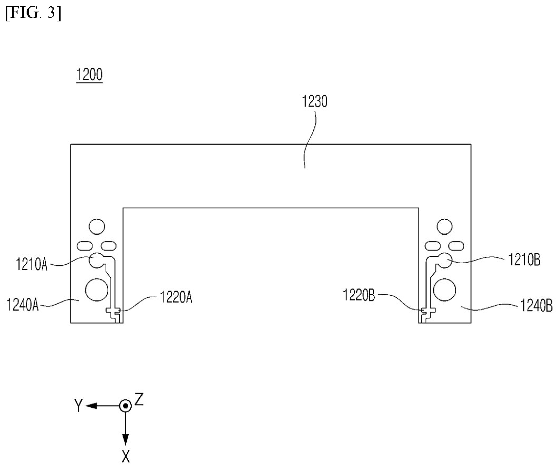

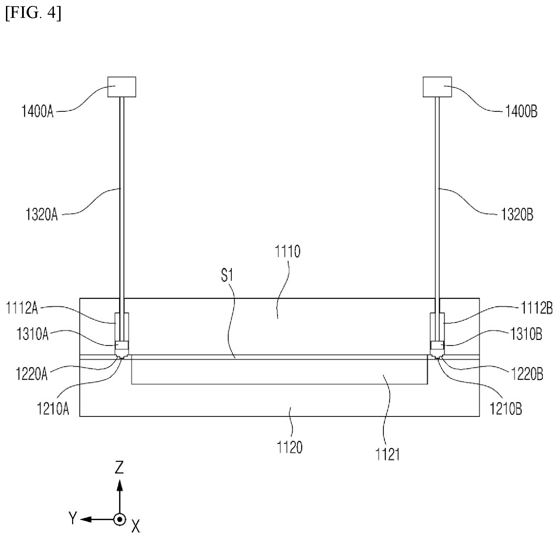

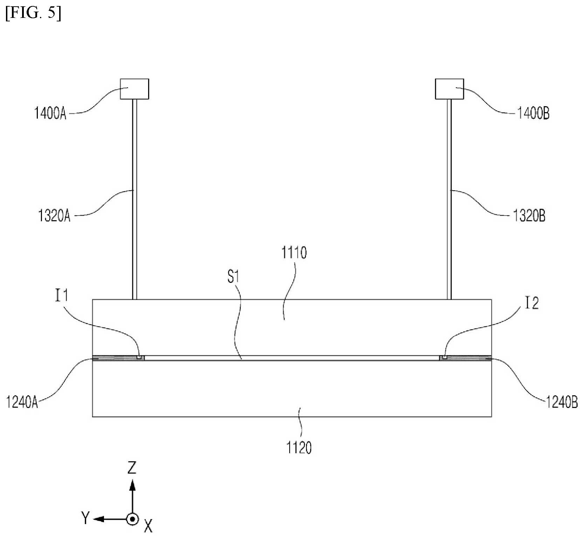

FIG. 1 is a schematic exploded view of an electrode slot die coater according to some embodiments. FIG. 2 is a schematic perspective view of an electrode slot die coater according to some embodiments. FIG. 3 is a schematic top view of the coating shim of an electrode slot die coater according to some embodiments. FIG. 4 is a cross-sectional view taken along the cutting line A-A' in FIG. 2. FIG. 5 is a schematic front view of an electrode slot die coater according to some embodiments.

Referring to FIGS. 1 through 5, the electrode slot die coater 1000 includes an upper block 1110, a lower block 1120, a coating shim 1200, a first variable unit 1300A, and a second variable unit 1300B. The first variable unit 1300A is connected to the first pressurizing device 1400A, and the second variable unit 1300B is connected to the second pressurizing device 1400B.

The lower block 1120 includes a manifold 1121 for storing electrode slurry. The position of the manifold 1121 is not limited, and the manifold 1121 may be located on the upper block 1110. The electrode slurry stored in the manifold 1121 is supplied from the outside of the electrode slot die coater 1000 through an electrode slurry supply flow path (not shown). The position of the electrode slurry supply flow path (not shown) is not limited and may be located in the upper block 1110 or the lower block 1120. The electrode slurry stored in the manifold 1121 is discharged through the slot S1.

The coating shim 1200 is positioned between the upper block 1110 and the lower block 1120. The coating shim 1200 includes a shim body 1230, a first shim guide 1240A protruding in the +X direction from one end of one side of the shim body 1230, and a second shim guide 1240B protruding in the +X direction from the other end of one side of the shim body 1230. The upper surface of the first shim guide 1240A includes a first insulating solution discharge flow path 1210A and a first long hole step part 1220A crossing the first insulating solution discharge flow path 1210A. The upper surface of the second shim guide 1240B includes a second insulating solution discharge flow path 1210B and a second long hole step part 1220B crossing the second insulating solution discharge flow path 1210B. The upper block 1110 includes a first insulating solution supply flow path 1111A and a second insulating solution supply flow path 1111B. The first insulating solution supply flow path 1111A supplies insulating solution to the first insulating solution discharge flow path 1210A, and the second insulating solution supply flow path 1111B supplies insulating solution to the second insulating solution discharge flow path 1210B. However, the positions of the first insulating solution supply flow path 1111A and the second insulating solution supply flow path 1111B are not limited, and the first insulating solution supply flow path 1111A and the second insulating solution supply flow path 1111B may be located in the lower block 1120. The insulating solution moves through the first insulating solution discharge flow path 1210A and the second insulating solution discharge flow path 1210B and is discharged through the first discharge port I1 and the second discharge port I2.

The first variable unit 1300A includes a first head part 1310A and a first body part 1320A, and the second variable unit 1300B includes a second head part 1310B and a second body part 1320B. The length of the first head part 1310A in the Y direction corresponds to the length of the first long hole step part 1220A in the Y direction, and the length of the first head part 1310A in the X direction corresponds to the length of the first long hole step part 1220A in the X direction. The length of the second head part 1310B in the Y direction corresponds to the length of the second long hole step part 1220B in the Y direction, and the length of the second head part 1310B in the X direction corresponds to the length of the second long hole step part 1220B in the X direction.

The upper block 1110 includes a first variable unit hole 1112A and a second variable unit hole 1112B. The first variable unit 1300A moves in a direction parallel to the Z direction within the first variable unit hole 1112A by power supplied from the first pressurizing device 1400A, thereby adjusting the opening degree of the first insulating solution discharge flow path 1210A. The second variable unit 1300B moves in a direction parallel to the Z direction within the second variable unit hole 1112B by power supplied from the second pressurizing device 1400B, thereby adjusting the opening degree of the second insulating solution discharge flow path 1210B.

When the first variable unit 1300A moves in the -Z direction, the first head part 1310A is inserted into the first long hole step part 1220A, allowing it to enter the first insulating solution discharge flow path 1210A. When the first head part 1310A enters the first insulating solution discharge flow path 1210A, the amount of insulating solution that can pass through the first insulating solution discharge flow path 1210A decreases. When the first variable unit 1300A moves in the +Z direction, the first head part 1310A disengages from the first long hole step part 1220A, allowing it to separate from the first insulating solution discharge flow path 1210A. When the first head part 1310A moves away from the first insulating solution discharge flow path 1210A, the amount of insulating solution that can pass through the first insulating solution discharge flow path 1210A increases. In other words, by moving the first variable unit 1300A in a direction parallel to the Z direction and adjusting the opening degree of the first insulating solution discharge flow path, the thickness of the insulating solution applied to the current collector from the first discharge port I1 can be precisely controlled. The description of the second variable unit 1300B is the same as that of the first variable unit 1300A, so the redundant description is omitted.

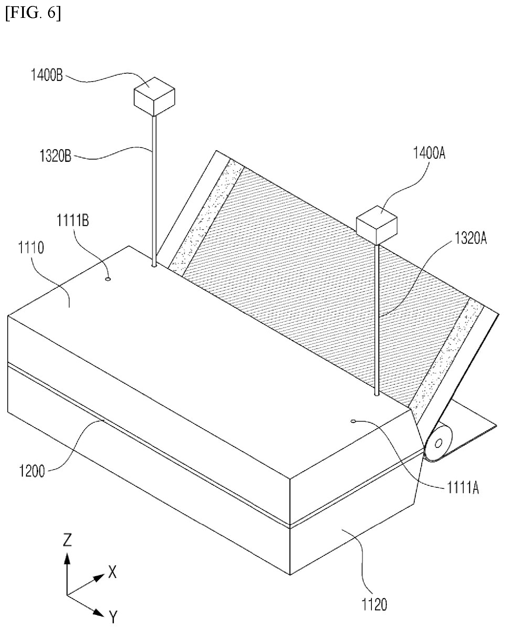

FIG. 6 is a drawing showing an electrode coated by an electrode slot die coater according to some embodiments. Referring to FIG. 6, the electrode slot die coater 1000 can simultaneously discharge electrode slurry and insulating solution onto the current collector, and discharge the insulating solution onto the side of the electrode slurry so that it comes into contact with the electrode slurry.

### (Second Embodiment)

The second embodiment differs from the first embodiment in the structure of the coating shim, resulting in a difference in the number of variable units. For the second embodiment, only the parts that differ from the first embodiment are described in detail, while parts that are substantially the same as the first embodiment are omitted or described briefly.

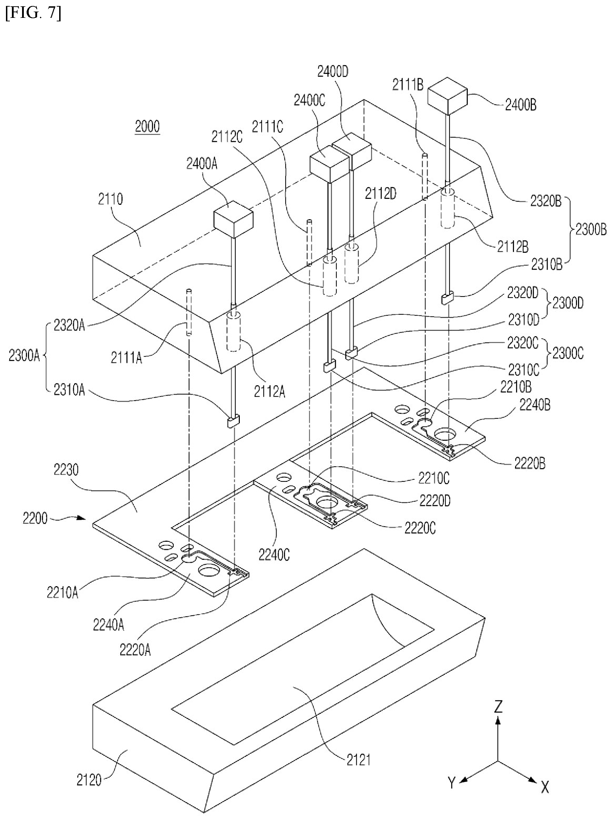

FIG. 7 is a schematic exploded view of an electrode slot die coater according to other embodiments. Referring to FIG. 7, the electrode slot die coater 2000 includes an upper block 2110, a lower block 2120, a coating shim 2200, a first variable unit 2300A, a second variable unit 2300B, a third variable unit 2300C, and a fourth variable unit 2300D. The first variable unit 2300A is connected to the first pressurizing device 2400A, and the second variable unit 2300B is connected to a second pressurizing device 2400B, the third variable unit 2300C is connected to a third pressurizing device 2400C, and the fourth variable unit 2300D is connected to a fourth pressurizing device 2400D.

The lower block 2120 has a manifold 2121 formed therein for storing electrode slurry. The coating shim 2200 includes a shim body 2230, a first shim guide 2240A protruding in the +X direction from one end of one side of the shim body 2230, a second shim guide 2240B protruding in the +X direction from the other end of one side of the shim body 2230, and a third shim guide 2240C protruding in the +X direction from the center of one side of the shim body 2230. The third shim guide 2240C is positioned between the first shim guide 2240A and the second shim guide 2240B. The upper surface of the first shim guide 2240A includes a first insulating solution discharge flow path 2210A and a first long hole step part 2220A. The upper surface of the second shim guide 2240B includes a second insulating solution discharge flow path 20210B and a second long hole step part 2220B. The upper surface of the third shim guide 2240C includes a third insulating solution discharge flow path 2210C, a third long hole step part 2220C, and a fourth long hole step part 2220D. The upper block 2110 includes a first insulating solution supply flow path 2111A, a second insulating solution supply flow path 2111B, and a third insulating solution supply flow path 2111C.

The first variable unit 2300A includes a first head part 2310A and a first body part 2320A, and the second variable unit 2300B includes a second head part 2310B and a second body part 2320B, the third variable unit 2300C includes a third head part 2310C and a third body part 2320C, and the fourth variable unit 2300D includes a fourth head part 2310D and a fourth body part 2320D. The upper block 2110 has a first variable unit hole 2112A, a second variable unit hole 2112B, a third variable unit hole 2112C, and a fourth variable unit hole 2112D formed therein.

In the electrode slot die coater 2000, the electrode slurry is divided into two lanes by the third shim guide 2240C and discharged. Additionally, the insulating solution moves not only along the first insulating solution discharge flow path 2210A and the second insulating solution discharge flow path 2210B, but also along the third insulating solution discharge flow path 2210C.

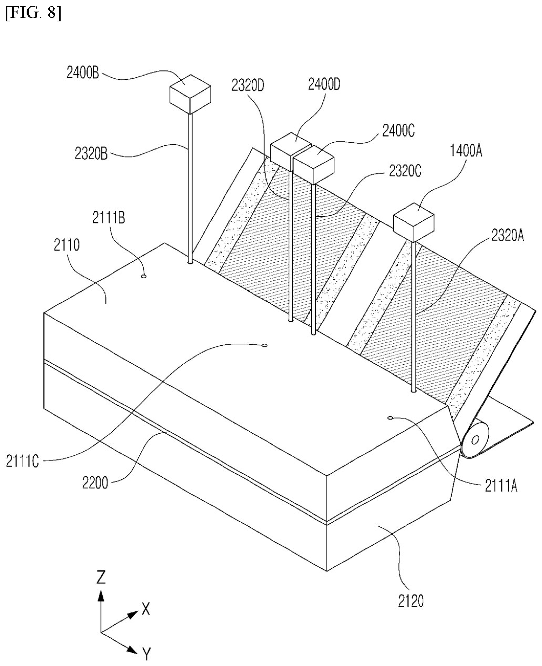

FIG. 8 is a drawing showing an electrode coated by an electrode slot die coater according to other embodiments. Referring to FIG. 8, the electrode slot die coater 2000 can discharge the electrode slurry and the insulating solution simultaneously while discharging the insulating solution onto the side of the electrode slurry so that the insulating solution comes into contact with the electrode slurry. Additionally, the electrode slot die coater 2000 can discharge the electrode slurry into two lanes.

### (Third Embodiment)

The third embodiment differs from the first embodiment in the number of blocks. For the third embodiment, only the parts that differ from the first embodiment are described in detail, while parts that are substantially identical to the first embodiment are omitted or described briefly.

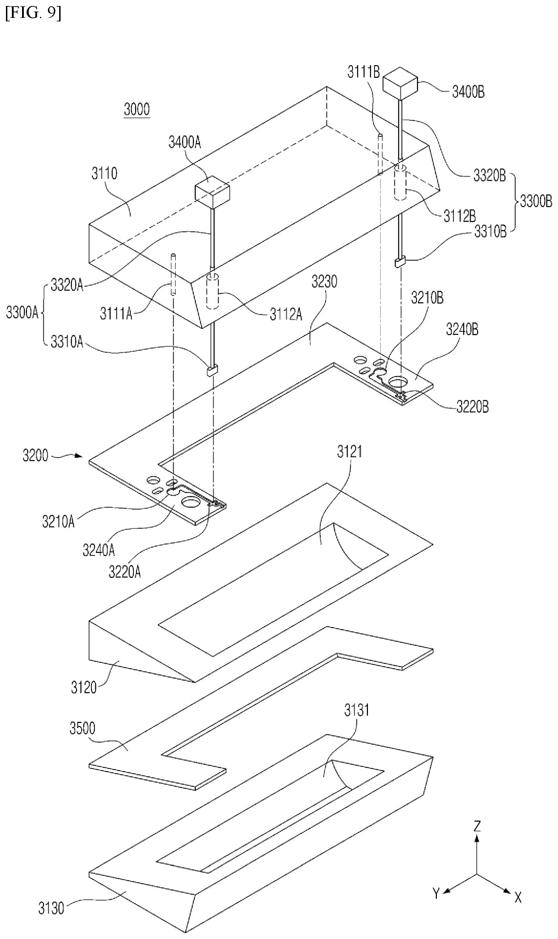

FIG. 9 is a schematic exploded view of an electrode slot die coater according to other embodiments. Referring to FIG. 9, the electrode slot die coater 3000 includes an upper block 3110, a middle block 3120, a lower block 3130, an upper coating shim 3200 and a lower coating shim 3500, a first variable unit 3300A, and a second variable unit 3300B. The first variable unit 3300A is connected to a first pressurizing device 3400A, and the second variable unit 3300B is connected to a second pressurizing device 3400B.

The middle block 3120 includes a manifold 3121 for storing electrode slurry, and the lower block 3130 also includes a manifold 3131 for storing electrode slurry. The upper coating shim 3200 is positioned between the upper block 3110 and the middle block 3120. The upper coating shim 3200 includes a shim body 3230 and a first shim guide 3240A and a second shim guide 3240B. The upper surface of the first shim guide 3240A is formed with a first insulating solution discharge flow path 3210A and a first long hole step part 3220A. The upper surface of the second shim guide 3240B is formed with a second insulating solution discharge flow path 3210B and a second long hole step part 3220B. The upper block 3110 includes a first insulating solution supply flow path 3111A and a second insulating solution supply flow path 3111B.

The first variable unit 3300A includes a first head part 3310A and a first body part 3320A, and the second variable unit 3300B includes a second head part 3310B and a second body part 3320B. The upper block 3110 has a first variable unit hole 3112A and a second variable unit hole (3112B) formed therein.

The lower coating shim 3500 is positioned between the middle block 3120 and the lower block 3130. The lower coating shim 3500 does not have an insulating solution supply flow path formed therein.

The electrode slot die coater 3000 not only discharges electrode slurry through the slot defined by the upper block 3110, the middle block 3120, and the upper coating shim 3200, but also discharges electrode slurry through the slot defined by the middle block 3120, the lower block 3130, and the lower coating shim 3500. In other words, the electrode slot die coater 3000 can apply the electrode slurry in two layers on the current collector.

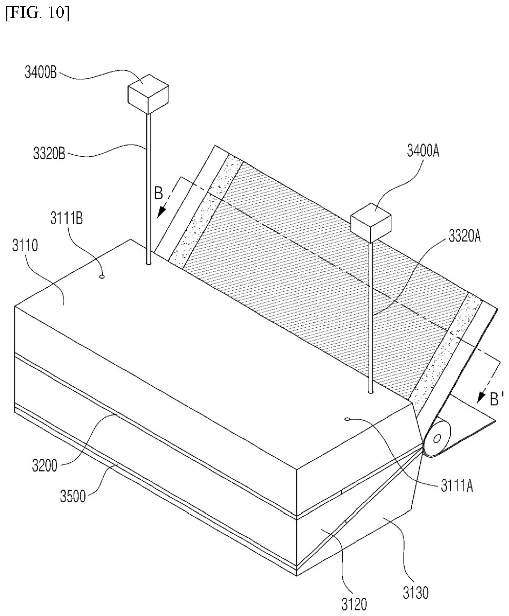

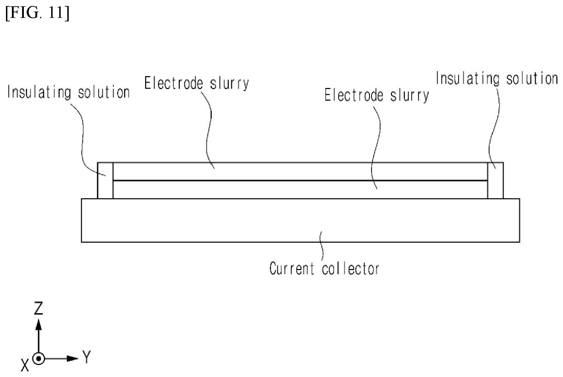

FIG. 10 is a drawing showing an electrode coated by an electrode slot die coater according to other embodiments. FIG. 11 is a cross-sectional view taken along the cutting line B-B' in FIG. 10. Referring to FIG. 10, it can be seen that the electrode slurry and insulating solution are simultaneously discharged, with the insulating solution being discharged onto the side of the electrode slurry so that it comes into contact with the electrode slurry. Referring to FIG. 11, it can be seen that the electrode slurry is applied in two layers onto the current collector.

### (Fourth Embodiment)

The fourth embodiment differs from the third embodiment in that a coating shim is positioned such that an insulating solution coating flow path is formed between the middle block and the lower block. For the fourth embodiment, only the parts that differ from the third embodiment will be described in detail, while descriptions of parts that are substantially identical to the third embodiment will be omitted or briefly noted.

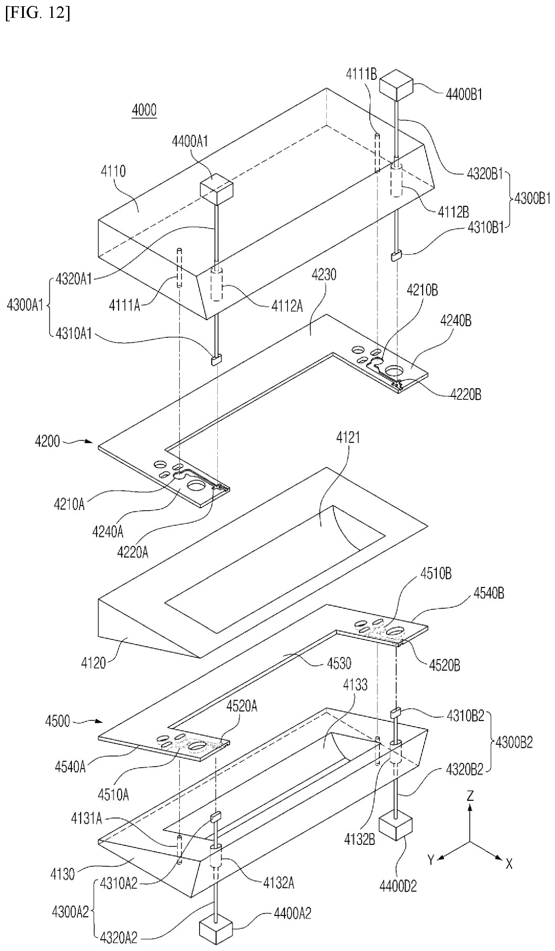

FIG. 12 is a schematic exploded view of an electrode slot die coater according to other embodiments. Referring to FIG. 12, the electrode slot coating die 4000 includes an upper block 4110, a middle block 4120, a lower block 4130, an upper coating shim 4200, a lower coating shim 4500, a first upper variable unit 4300A1, a second upper variable unit 4300B1, a first lower variable unit 4300A2, and a second lower variable unit 4300B2. The first upper variable unit 4300A1 is connected to the first upper pressurizing device 4400A1, and the second upper variable unit 4300B1 is connected to the second upper pressurizing device 4400B1, the first lower variable unit 4300A2 is connected to the first lower pressurizing device 4400A2, and the second lower variable unit 4300B2 is connected to the second lower pressurizing device 4400B2.

The middle block 4120 has a manifold 4121 for storing electrode slurry, and the lower block 4130 also has a manifold 4133 for storing electrode slurry.

The upper coating shim 4200 includes an upper shim body 4230 and a first upper shim guide 4240A and a second upper shim guide 4240B. The upper surface of the first upper shim guide 4240A includes a first upper insulating solution discharge flow path 4210A and a first upper long hole step part 4220A. The upper surface of the second upper shim guide 4240B includes a second upper insulating solution discharge flow path 4210B and a second upper long hole step part 4220B. The upper block 4110 includes the first upper insulating solution supply flow path 4111A and the second upper insulating solution supply flow path 4111B.

The lower coating shim 4500 includes a lower shim body 4530, a first lower shim guide 4530A, and a second lower shim guide 4530B. The lower surface of the first lower shim guide 4530A has a first lower insulating solution discharge flow path 4510A and a first lower long hole step part 4520A formed therein. The lower surface of the second lower shim guide 4540B includes a second lower insulating solution discharge flow path 4510B and a second lower long hole step part 4520B. The lower block 4130 includes a first lower insulating solution supply flow path 4131A and a second lower insulating solution supply flow path 4131B.

The first upper variable unit 4300A1 includes a first upper head part 4310A1 and a first upper body part 4320A1, and the second upper variable unit 4300B1 includes a second upper head part 4310B1 and a second upper body part 4320B1. The first lower variable unit 4300A2 includes a first lower head part 4310A2 and a first lower body part 4320A2, and the second lower variable unit 4300B2 includes a second lower head part 4310B2 and a second lower body part 4320B2. The upper block 4110 has a first upper variable unit hole 4112A and a second upper variable unit hole 4112B formed therein. The lower block 4130 has a first lower variable unit hole 4132A and a second lower variable unit hole 4132B formed therein.

The electrode slot die coater 4000 can apply not only electrode slurry but also insulating solution in two layers.

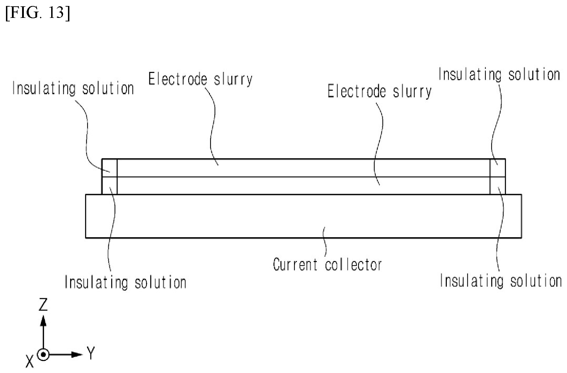

FIG. 13 is a cross-sectional view of an electrode coated by an electrode slot die coater according to other embodiments, for comparison with FIG. 11. Referring to FIG. 13, it can be seen that not only the electrode slurry but also the insulating solution is applied in two layers on the current collector.

The above description is merely illustrative of the present disclosure. The scope of the present disclosure should be interpreted in accordance with the claims, and all technical ideas within the scope of the claims, including those equivalent or uniform to the claims, should be interpreted as falling within the scope of the present disclosure.

### [Description of Sign]

ELECTRODE SLOT DIE COATER: 1000, 2000, 3000, 4000
BLOCK: 1110, 1120, 2110, 2120, 3110, 3120, 3130, 4110, 4120, 4130
MANIFOLD: 1121, 2121, 3121, 3131, 4121, 4133
INSULATING SOLUTION SUPPLY FLOW PATH: 1111A, 1111B, 2111A, 2111B, 2111C, 3111A, 3111B, 4111A, 4111B, 4131A, 4131B
VARIABLE UNIT HOLE: 1112A, 1112B, 2112A, 2112B, 2112C, 2112D, 3112A, 3112B, 4112A, 4112B, 4132A, 4132B
COATING SHIM: 1200, 2200, 3200, 3500, 4200, 4500
INSULATING SOLUTION DISCHARGE FLOW PATH: 1210A, 1210B, 2210A, 2210B, 2210C, 3210A, 3210B, 4210A, 4210B, 4510A, 4510B
LONG HOLE STEP PART: 1220A, 1220B, 2220A, 2220B, 2220C, 2220D, 3220A, 3220B, 4220A, 4220B, 4520A, 4520B
SHIM BODY: 1230, 2230, 3230, 4230, 4530
SHIM GUIDE: 1240A, 1240B, 2240A, 2240B, 2240C, 3240A, 3240B, 4240A, 4240B, 4540A, 4540B
VARIABLE UNIT: 1300A, 1300B, 2300A, 2300B, 2300C, 2300D, 3300A, 3300B, 4300A1, 4300B1, 4300A2, 4300B2
HEAD PART: 1310A, 1310B, 2310A, 2310B, 2310C, 2310D, 3310A, 3310B, 4310A1, 4310B1, 4310A2, 4310B2
BODY PART: 1320A, 1320B, 2320A, 2320B, 2320C, 2320D, 3320A, 3320B, 4300A1, 4300B1, 4320A2, 4320B2
PRESSURIZING DEVICE: 1400A, 1400B, 2400A, 2400B, 2400C, 2400D, 3400A, 3400B, 4400A1, 4400B1, 4400A2, 4400B2

## Claims

1. An electrode slot die coater comprising:
n blocks arranged adjacent to each other, n being an integer between 2 and 5;
a coating shim positioned at one or more of the interfaces between the blocks, and having an insulating solution discharge flow path formed therein; and
a variable unit for adjusting the opening degree of the insulating solution discharge flow path.

2. The electrode slot die coater of claim 1, wherein
the variable unit controls the degree of opening of the insulating solution discharge flow path by one or more of vertical movement, horizontal movement, and rotational movement.

3. The electrode slot die coater of claim 1, wherein
the coating shim is a structure in which the insulating solution discharge flow path is formed on one or both sides.

4. The electrode slot die coater of claim 1, wherein
the coating shim comprises a long hole step part formed in a direction crossing the insulating solution discharge flow path, and having a width longer than a width of the insulating solution discharge flow path, wherein
the variable unit adjusts the degree of opening of the insulating solution discharge flow path by vertical movement.

5. The electrode slot die coater of claim 4, wherein
the width of the long hole step part is within the range of 110% to 500% of the width of the insulating solution discharge flow path, wherein
the depth of the long hole step part is within the range of 20% to 100% of the depth of the insulating solution discharge flow path.

6. The electrode slot die coater of claim 4, wherein
the variable unit comprises:
a head part inserted into the long hole step part; and
a body part formed by extending from the head part, wherein
the width of the head part of the variable unit corresponds to the width of the long hole step part.

7. The electrode slot die coater of claim 6, wherein
the body part of the variable unit has a structure connected to a pressurizing device located outside the electrode slot die coater.

8. The electrode slot die coater of claim 1, wherein
the coating shim comprises a shim body and a plurality of shim guides formed by protruding unidirectionally from one side of the shim body to define the discharge width of an electrode slurry, wherein
the insulating solution discharge flow path has a structure formed in each of the plurality of shim guides.

9. The electrode slot die coater of claim 1, wherein
the electrode slot die coater has a structure comprising:
an upper block;
a lower block; and
a coating shim positioned between the upper block and the lower block.

10. The electrode slot die coater of claim 1, wherein
the electrode slot die coater has a structure comprising:
an upper block;
a middle block;
a lower block;
a first coating shim positioned between the upper block and the middle block; and
a second coating shim positioned between the middle block and the lower block, wherein
at least one of the first and second coating shim has an insulating solution discharge flow path formed therein.

11. An electrode manufacturing method using the electrode slot die coater according to claim 1, wherein
an electrode slurry and an insulating solution are simultaneously discharged onto a current collector sheet traveling over a coating roller.

12. The electrode manufacturing method of claim 11, simultaneously performing:
a step of discharging the electrode slurry onto the current collector sheet; and
a step of discharging the insulating solution onto the side of the electrode slurry so that it comes into contact with the discharged electrode slurry.

13. The electrode manufacturing method of claim 11, further comprising:
a drying step of drying the electrode slurry and the insulating solution discharged onto the current collector together.

14. The electrode manufacturing method of claim 11, wherein
the electrode slurry comprises an electrode active material, a binder, a conductive material, and a solvent, wherein
the insulating solution comprises inorganic particles, a binder, and a solvent.

15. The electrode manufacturing method of claim 14, wherein
the binder content in the electrode slurry is in the range of 1 to 5 weight % based on the solid content of the electrode slurry, wherein
the binder content in the insulating solution is in the range of 6 to 60 weight % based on the solid content of the insulating solution.
